# EUROPÄISCHE PATENTANMELDUNG

(11) **EP 1 094 309 A2**
(43) Veröffentlichungstag der Anmeldung: **25.04.2001**
(21) Anmeldenummer: 00120905.5
(22) Anmeldetag: 26.09.2000
(51) Int. Cl.: G01J 3/50, B41F 33/00

(54) **Messvorrichtung für die Qualitätskontrolle von Druckprodukten**

(30) Priorität: 22.10.1999 DE 29918640 U
(71) Anmelder: MAN Roland Druckmaschinen AG, 63075 Offenbach (DE)
(72) Erfinder: Lampersberger, Franz, 85609 Aschheim (DE); Wendt, Karsten, Dr., 63179 Obertshausen (DE); Tielebörger, Bernd, 81477 München (DE); Tutsch, Rainer, Dr., 80636 München (DE); Rakitsch, Peter, 85368 Moosburg (DE); Six, Hans Joachim, Dr., 81669 München (DE); Sierks, Jörg, Dr., 81541 München (DE)
(74) Vertreter: Stahl, Dietmar

(57) **Zusammenfassung**

Beschrieben wird eine Messvorrichtung für die Qualitätskontrolle von Druckprodukten, mit einem Beleuchtungskanal zur Ausleuchtung einer Messstelle, mit einem das von der Messstelle remittierte Licht aufnehmenden Remissionskanal, einer nachgeschalteten und die remittierte Strahlung spektral analysierenden Bewertungseinheit sowie im Beleuchtungs- und/oder Remissionskanal angeordneten Pol-Filtern. Aufgabe der vorliegenden Erfindung ist es eine solche Messvorrichtung derartig zu erweitern, so dass bei vertretbarem messtechnischen Bauaufwand die Zahl die mit der Messvorrichtung gewinnbaren Messwerte sowie die Möglichkeiten der Weiterverarbeitung erhöht werden kann. Erfindungsgemäß gelingt dies dadurch, dass ein Beleuchtungskanal (1) ohne und ein Beleuchtungskanal (2) mit Pol-Filter (2.1) zur Beaufschlagung von Messstellen ohne und mit polarisierter Strahlung vorgesehen ist, und dass den Beleuchtungskanälen (1, 2) jeweils ein Remissionskanal (3) ohne und ein Remissionskanal (4) mit einer Einrichtung (4.1) zur Polarisation des von den Messstellen remittierten Lichtes zugeordnet ist.

## Beschreibung

Die Erfindung betrifft eine Messvorrichtung für die Qualitätskontrolle von Druckprodukten gemäß dem Oberbegriff von Anspruch 1.

### [Stand der Technik]

Zur messtechnischen Qualitätskontrolle an Druckprodukten und insbesondere von im Offsetdruckverfahren hergestellten Druckprodukten werden seit langer Zeit Densitometer eingesetzt. Bei Densitometern wird ein Messfeld mit Licht vorgegebener Farbtemperatur bestrahlt und das von dem Messfeld remittierte Licht in ein oder mehreren Messkanälen analysiert. In den Messkanälen erfolgt durch Filterung bzw. spektralphotometrische Analyse eine Signalwandlung in einem zur Farbe des Farbmessfeldes komplementären Strahlungsbereich. Dadurch wird die Absorption des Farbmessfeldes bestimmt. Diese im Offsetdruck weitverbreitete Messtechnik ist wegen der beim Offsetdruck meist verwendeten lasierenden Druckfarben sinnvoll, da ein Zusammenhang zwischen optischer Dichte und Schichtdicke der Farbe auf dem Messfeld besteht. Densitometerwerte können so in einfacher Weise zur Kontrolle der Farbführung verwendet werden.

Bekannte Densitometer sind in 0/45- bzw. 45/0-Grad-Geometrie aufgebaut. Dies bedeutet, dass das Messfeld senkrecht bzw. im 45°-Winkel beleuchtet wird das vom Messfeld remittierte Licht entweder im Winkel unter 45° oder senkrecht zum Messfeld empfangen und durch einen photoelektrischen Wandler mit nachgeschalteter Auswerteeinheit zu Densitometerwerten umgerechnet wird. Um Glanzeffekte bei frisch gedruckten Farben zu unterdrücken ist es ferner bekannt, im Beleuchtungs- wie Empfangskanal Polarisationsfilter (Pol-Filter) anzuordnen. Die Ebenen der Pol-Filter sind gekreuzt, so dass dadurch der an der Oberfläche der frischen Farbe verursachte Glanz unterdrückt wird. Dadurch wird eine Angleichung der Messwerte von frisch gedruckten Proben an die mit durchtrockneten Messfeldern möglich.

Neben densitometrischen Messwerten werden zunehmend auch farbmetrische Messwerte zur Qualitätskontrolle an Druckprodukten verwendet. Mittels nach dem Dreibereichs- bzw. spektralphotometrischen Messverfahren gewonnenen Farbmesswerten können Skalen. und Sonderfarben kontrolliert und insbesondere Vereinbarungen über zu erzielende Farborte getroffen werden. Nach dem Dreibereichs-Messverfahren aufgebaute Farbmessgeräte sind kompakt und einfach im Aufbau, eignen sich jedoch lediglich für die Farbmessung. Bei Spektralphotometern wird das am Messfeld remittierte Licht spektralphotometrisch aufgespalten und es erfolgt eine digitale Wichtung der Strahlung. So können beliebige Filterkurven zur Anwendung kommen. Mittels einem Spektralphotometer können daher farbmetrische als auch densitometrische Werte (je nach den verwendeten Filterkurven) gewonnen werden. Die der Farbmessung zugrunde liegenden Normen sehen wegen der angestrebten Nachbildung des menschlichen Gesichtssinnes eine Verwendung von Polarisationsfiltern nicht vor, demzufolge sind als Farbmessgerät und Densitometer verwendbare Spektralphotometer nur ohne bzw. in aufwendiger Weise mit schaltbaren Polarisationsfiltern ausgestattet. Gerade die letzte Variante erhöht den bautechnischen Aufwand beträchtlich oder die Messzeit erhöht sich.

Aus der DE 88 16 978 U1 ist ein in X- und Y-Richtung verfahrbares Messgerät bekannt, mit der beliebige Stellen am Druckbogen ausmessbar sind. Das Messgerät umfasst einen 3-Farben-Simultanmesskopf für die densitometrische Messung sowie einen Dreibereichs-Farbmesskopf. Eine rein spektrale Messwertgewinnung erfolgt weder in dem 3-kanaligen Densitometermesskopf noch in dem Dreibereichs-Farbmesskopf. Die Einsatzmöglichkeiten dieser vorbekannten Einrichtung sowie die Möglichkeiten zur Messwertgenerierung und der Weiterverarbeitung der Messwerte (zur Prozesskontrolle) sind dadurch sehr eingeschränkt.

Aus der DE 195 30 185 A1 ist eine Vorrichtung zur Farbmessung für den Offsetdruck bekannt, wobei hier ein Beleuchtungskanal mit Polarisationsfilter die Messstelle senkrecht beleuchtet und die Empfangskanäle mit und ohne Polarisationsfilter das von der Messstelle remittierte Licht unter 45° empfangen. Dieser Aufbau ist kompakt in Bauform und Bauaufwand, jedoch ist es als nachteilig anzusehen, dass die Ausleuchtung der Messstelle generell mit polarisiertem Licht erfolgt. Für die Ableitung farbmetrischer Messwerte aber auch zum Vergleich von Remissionswerten an frisch gedruckten bzw. getrockneten Proben sind generell mit polarisiertem Licht in der Bestrahlung gewonnene Messwerte nicht verwendbar. Auch dadurch wird der Einsatzbereich dieses Messsystems eingeschränkt.

### [Aufgabe der Erfindung]

Aufgabe der vorliegenden Erfindung ist es daher, eine Messvorrichtung gemäß dem Oberbegriff von Anspruch 1 derartig zu erweitern, so dass bei vertretbarem messtechnischen Bauaufwand die Zahl der mit der Messvorrichtung gewinnbaren Messwerte sowie die Möglichkeiten der Weiterverarbeitung erhöht werden kann.

Gelöst wird diese Aufgabe durch die kennzeichnenden Merkmale von Anspruch 1. Weiterbildungen der Erfindung ergeben sich aus Unteransprüchen.

### [Beispiele]

Gemäß der Erfindung ist vorgesehen, dass ein Beleuchtungskanal mit sowie ein weiterer Beleuchtungskanal ohne Polarisationsfilter vorgesehen ist und dass dem Beleuchtungskanal mit Polarisationsfiltern Empfangskanäle ebenfalls mit Polarisationsfiltern sowie dem Beleuchtungskanal ohne Polarisationsfilter Empfangskanäle ohne Pol-Filter zugeordnet sind.

Durch die erfindungsgemäße Messeinrichtung kann eine Messstelle in einem Messlauf densitometrisch mit Pol-Filtern sowie über den Beleuchtungs- und die Empfangskanäle ohne Pol-Filter spektralphotometrisch - zur Gewinnung von Farbmesswerten - ausgemessen werden. Ein Schalten von Pol-Filtern und ein dadurch bedingtes aufeinander folgendes Messen ist somit entbehrlich.

Durch die spektral arbeitenden Empfangskanäle in Verbindung mit dem Beleuchtungskanal ohne Pol-Filter können sowohl Spektren als auch daraus abgeleitete Farbmesswerte der Messfelder gewonnen werden. Weiterhin können mit den Messkanälen mit und ohne Pol-Filter spektrale Messwerte zur Bewertung und Kompensation der Trocknungseigenschaften von Einzelfarben und Übereinanderdrucken gewonnen werden. Durch die Verwendung von spektral aufgebauten Empfangskanälen können beliebige Filter generiert werden, sodass nicht nur Skalenfarben sondern auch Sonderfarben im jeweilig höchsten Absorptionsbereich geregelt bzw. gemessen werden können.

Gemäß einer bevorzugten Ausführungsform der Erfindung ist vorgesehen, dass die mit und ohne Pol-Filter versehenen Beleuchtungskanäle von einer zentralen Lampeneinheit aus gespeist werden. Die Strahlung der Lampeneinheit wird Über Lichtwellenleiter der die Messstellen ausleuchtenden Optik zugeführt. In dem Strahlengang der jeweiligen Beleuchtungsoptik sind in einem Fall ein Pol-Filter und im anderen Fall kein Pol-Filter angeordnet. Bevorzugt erfolgt die Beleuchtung der Messstellen in beiden Messkanälen unter 45° mittels einer Ringoptik.

Gemäß der zuvorstehend geschilderten bevorzugten Ausführungsform der Erfindung ist weiterhin vorgesehen, dass die von der Messstelle remittierte Strahlung ebenfalls über Lichtwellenleiter den mit optoelektrischen Wandlern versehenen Bewertungseinheiten zugeführt wird. Da die Beleuchtung der Messfelder unter 45° erfolgt, wird die vom Messfeld remittierte Strahlung senkrecht zum Messfeld aufgenommen. Den Lichtwellenleitern ist eine geeignete Optik zur Aufnahme (Bündelung) der vom Messfeld remittierten Strahlung vorgeordnet.

Dem Beleuchtungskanal mit Linear-Pol-Filter ist im Empfangsstrahlengang mit nachgeordnetem Lichtwellenleiter ebenfalls ein Pol-Filter zugeordnet, so dass die von der Messstelle remittierte Strahlung durch das Pol-Filter empfangen und einer Filterbewertungseinheit (Spektralphotometer) zugeleitet werden kann. In der Filterbewertungseinheit kann über einen Referenzkoppler zudem auch die Strahlung der zentralen Lampeneinheit analysiert werden, um so in an für sich bekannter Weise die Einflüsse des Lampenspektrums zu kompensieren.

Die durch den Beleuchtungskanal ohne Linear-Pol-Filter empfangbare Strahlung wird ebenfalls über ein Lichtwellenleiter, einem Spektralphotometer bzw. einer normgerechten farbmetrischen Bewertungseinheit zugeführt. Die farbmetrische Bewertungseinheit kann ebenfalls eine die Strahlung spektral analysierende (nummerische Wichtung der einzelnen Spektralbereiche) Einheit sein.

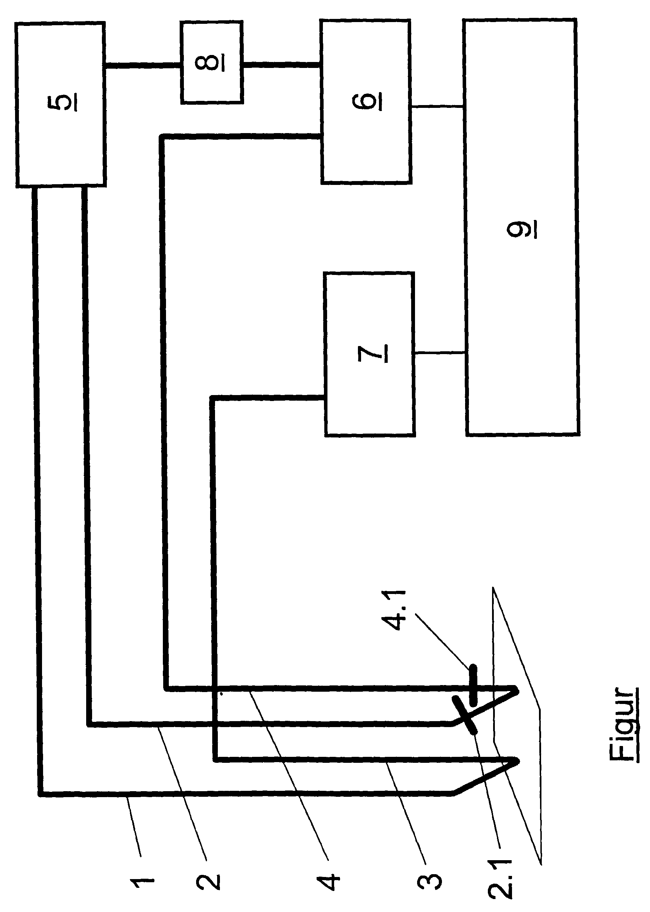

Des Weiteren erfolgt die Erläuterung eines Ausführungsbeispiels anhand der einzigen Zeichnung. Diese zeigt prinzipiell die Komponenten der Messvorrichtung.

In einer Messkopfeinheit sind zwei Beleuchtungskanäle 1, 2 angeordnet, durch welche ein in der Figur angedeutetes Messfeld unter 45° bestrahlbar ist. Die Beleuchtungskanäle 1, 2 sind vorzugsweise als Ringoptik ausgeführt, wobei die Strahlung zur Ausleuchtung der Messstellen auf dem Messfeld von einer zentralen Lampeneinheit 5 über Lichtwellenleiter geleitet wird.

In dem Beleuchtungskanal 2 ist ein Linear-Pol-Filter 2.1 angeordnet, so dass die Strahlung zur Ausleuchtung der Messstellen polarisiert auf diese trifft.

Den Beleuchtungskanälen 1, 2 sind Remissionskanäle 3, 4 zugeordnet, durch welche das von den jeweiligen Messstellen in senkrechter Richtung remittierte Licht zu einer spektralen Auswerteeinheit 6 sowie einer farbmetrischen Auswerteeinheit 7 geleitet wird. Auch hier erfolgt die Weiterleitung der Strahlung der Messstellen über Lichtwellenleiter. Den Lichtwellenleitern sind die remittierte Strahlung der Messstellen in diese einkoppelnde optische Komponenten vorgeschaltet. Derartige optische Komponenten sind an sich bekannt und bedürfen daher keiner weiteren Erläuterung.

Im Strahlengang des Remissionskanals 4 ist ein Linear-Pol-Filter 4.1 angeordnet, so dass die von der Messstelle remittierte Strahlung nur im polarisierten Anteil über den Lichtwellenleiter zur spektralen Auswerteeinheit 6 geleitet wird.

Die zentrale Lampeneinheit 5 ist über Lichtwellenleiter mit den Beleuchtungskanälen 1, 2 verbunden. Ober einen weiteren Lichtwellenleiter sowie einen Referenzkoppler 8 wird die Strahlung der zentralen Lampeneinheit auch der spektralen Auswerteeinheit 6 zugeordnet, so dass die über den Remissionskanal 4 der beispielsweise als Spektralphotometer ausgebildeten spektralen Bewertungseinheit 6 zugeleitete Strahlung in Verbindung mit dem Beleuchtungsspektrum analysiert werden kann.

Die über einen Lichtwellenleiter der farbmetrischen Bewertungseinheit 7 zugeleitete Strahlung des Remissionskanals 3 (unpolarisiert) wird entweder durch physikalische Filter oder ebenfalls in Form eines Spektralphotometers durch digitale Wichtung farbmetrisch analysiert. Die Ausgangssignale der spektralen Bewertungseinheit 6 sowie der farbmetrischen Bewertungseinheit 7 werden einer Auswerteeinheit 9 zugeführt, durch welche die anfallenden Messsignale gesammelt (gespeichert), nach vorgegebenen Formeln in entsprechende Größen umgerechnet sowie einer nicht dargestellten Anzeige zugeführt werden können.

### [Bezugszeichenliste]

- 1: Beleuchtungskanal (unpolarisiert)
- 2: Beleuchtungskanal (polarisiert)
- 3: Remissionskanal (unpolarisiert)
- 4: Remissionskanal (polarisiert)
- 2.1: Linear-Pol-Filter (Beleuchtungskanal 2)
- 4.1: Linear-Pol-Filter (Remissionskanal 4)
- 5: zentrale Beleuchtungseinheit / Lampeneinheit
- 6: spektrale Bewertungseinheit (Spektralphotometer)
- 7: farbmetrische Bewertungseinheit (Farbmesseinrichtung)
- 8: Referenzkoppler
- 9: Auswerteeinheit

## Patentansprüche

1. Messvorrichtung für die Qualitätskontrolle von Druckprodukten, mit einem Beleuchtungskanal zur Ausleuchtung einer Messstelle, mit einem das von der Messstelle remittierte Licht aufnehmenden Remissionskanal, einer nachgeschalteten und die remittierte Strahlung spektral analysierenden Bewertungseinheit sowie im Beleuchtungs- und/oder Remissionskanal angeordneten Pol-Filtern,
dadurch gekennzeichnet,
dass ein Beleuchtungskanal (1) ohne und ein Beleuchtungskanal (2) mit Pol-Filter (2.1) zur Beaufschlagung von Messstellen ohne und mit polarisierter Strahlung vorgesehen ist, und dass den Beleuchtungskanälen (1, 2) jeweils ein Remissionskanal (3) ohne und ein Remissionskanal (4) mit einer Einrichtung (4.1) zur Polarisation des von den Messstellen remittierten Lichtes zugeordnet ist.

2. Messvorrichtung nach Anspruch 1,
dadurch gekennzeichnet,
dass in einem Beleuchtungs- und Remissionskanal (2, 4) jeweils Linear-Pol-Filter (2.1, 4.1) angeordnet sind.

3. Messvorrichtung nach Anspruch 1 oder 2,
dadurch gekennzeichnet,
dass den Beleuchtungskanäien (1, 2) eine zentrale Beleuchtungseinheit (5) mit einem Strahlungserzeuger zugeordnet ist.

4. Messvorrichtung nach einem der vorhergehenden Ansprüche,
dadurch gekennzeichnet,
dass die Beleuchtungskanäle (1, 2) Lichtwellenleiter aufweisen.

5. Messvorrichtung nach einem der vorhergehenden Ansprüche,
dadurch gekennzeichnet,
dass die Remissionskanäle (3, 4) Lichtwellenleiter aufweisen.

6. Messvorrichtung nach einem der vorhergehenden Ansprüche,
dadurch gekennzeichnet,
dass durch den Remissionskanal (3) die von der Messstelle remittierte Strahlung einer farbmetrischen Bewertungseinheit (7) zuleitbar ist.

7. Messvorrichtung nach einem der vorhergehenden Ansprüche,
dadurch gekennzeichnet,
dass durch den Remissionskanal (4) und das Pol-Filter(4.1) die von der Mess-Stelle remittierte Strahlung einer spektralphotometrischen Bewertungseinheit (6) zuführbar ist.

8. Messvorrichtung nach einem der vorhergehenden Ansprüche,
dadurch gekennzeichnet,
dass der spektralphotometrischen Bewertungseinheit (6) die Strahlung der Beleuchtungseinrichtung (5) über einen Referenzkoppler (8) zuführbar ist.

9. Messvorrichtung nach einem der vorhergehenden Ansprüche,
dadurch gekennzeichnet,
dass der spektralphotometrischen Bewertungseinheit (6) sowie der farbmetrischen Bewertungseinheit (7) eine die Messsignale gemeinsam verarbeitende Auswerteeinheit nachgeordnet ist.
